# EUROPEAN PATENT APPLICATION

(11) **EP 2 085 963 A1**
(43) Date of publication of application: **05.08.2009**
(21) Application number: 09151293.9
(22) Date of filing: 04.02.2000
(51) Int. Cl.: G10L 15/18, G10L 15/22

(54) **System and method for bilateral communication between a user and a system**

(30) Priority: 04.02.1999 US 118800 P; 01.02.2000 US 495722
(62) Divisional of application: 00914516.0
(71) Applicant: Solque Software Limited Liability Company, Wilmington DE 19808 (US)
(72) Inventor: Lucente, Mark, New York, NY 10024 (US); Polish, Nathaniel, New York, NY 10025 (US)
(74) Representative: Camp, Ronald

(57) **Abstract**

A method for a human machine communication system that includes the steps of receiving a first statement in a natural language from a user, generating first information based on the statement and storing context information of at least one of the first statement and the first information. The method also includes the steps of optionally generating a question to be presented to the user in the natural language based on the context information, receiving a second statement in the natural language from the user and generating second information based on the second statement and the context information.

## Description

This application is a continuation-in-part of application serial No. (identified by attorney docket No.10244-003), filed February 1, 2000, which is hereby incorporated by reference in its entirety. Both that application and this application claim priority from provisional patent application serial No. 60/118,800, filed February 4, 1999, which is hereby incorporated by reference in its entirety.

### FIELD OF THE INVENTION

The present invention relates to the fields of speech processing, human-machine dialogue, and database retrieval in both client-server and other computer systems.

### BACKGROUND OF THE INVENTION

Conventional speech recognition systems are generally unidirectional. Speech recognizers typically receive verbal input from a user and execute commands or produce textual output that could otherwise be effected or created by the user with a keypad, keyboard, or other input device. Speech synthesizers typically simply generate verbal output that otherwise would be available to the user on screens or printouts. Furthermore, conventional speech systems do not fully utilize context information which is an integral part of human-to-human communication.

### SUMMARY OF THE INVENTION

Disclosed is a bilateral speech system and method that allows effective communication between a person (a user) and a computer. In a preferred embodiment, the disclosed system comprises a speech recognizer for recognizing spoken input from a user and a language model and query generator for interpreting that input and generating database queries from it. User input may comprise a statement; a question; or an answer to a question posed by the system.

User input is interpreted both on the basis of the input itself and on the basis of the context in which the input was made. This context is developed by storing aspects of a continuing dialogue between the user and the system in memory.

System output may take the form of either information output to the user or actions taken by the system to satisfy user requests. System output is also informed by, and contributes to, the stored context. Information output to the user may comprise a statement; a question; or an answer to a question posed by the user.

In another aspect, the present disclosure includes a method that comprises the steps of receiving a first statement in a natural language from a user, generating first information based on the first statement, and storing context information of at least one of the first statement and the first information.

The method of the present invention further includes the steps of optionally generating a question to be presented to the user in a natural language based on context information, receiving a second statement in the natural language from the user, and generating second information based on the second statement and the context information.

Moreover, the method may include the steps of incorporating content information generated based on the second information into a web page. If desired, the web page may be dynamically generated. The method may also include the steps of generating grammatical data for the first statement, generating one or more parsing tokens based on the grammatical data, and storing the parsing tokens as part of the context information. Further, the parsing tokens can be added, modified, or removed based on the second statement.

The method of the present invention may further include the steps of identifying linguistic structures in the second statement based on the context information. In particular, the method may further include the steps of identifying an antecedent to a pronoun in the second statement or disambiguating a homonym in the second statement.

The method may also include the steps of storing and updating the context information each time a new statement in the natural language is received or providing at least one of a superlative and a comparison of the first information based on the context information. Here, the first information includes a plurality of items that can be compared with each other.

The disclosed system may include a server computer that includes an input device configured to receive a first statement in the natural language from a user. The server computer is configured to generate first information based on the first statement. The server computer also includes a memory bank configured to store context information of at least one of the first statement and the first information. The input device is further configured to receive a second statement in the natural language from the user. In turn, the server computer is further configured to optionally generate a question to be presented to the user in the natural language based on the context information and configured to generate second information based on the second statement and the context information.

The disclosed system may also include a client computer configured to receive a plurality of statements from the user and configured to forward the received plurality of statements to the server computer.

The server computer may include a knowledge database configured to provide language processing information. In particular, the server computer may be configured to generate a plurality of parsing tokens based on the first statement and the language processing information. The memory bank may further be configured to store the parsing tokens as part of the context information. Furthermore, the server computer may be further configured to add, modify, or remove the stored parsing tokens in the memory bank based on the second statement.

The server computer may be further configured to identify linguistic structures in the second statement based on the context information. In particular, the server computer may be configured to identify an antecedent to a pronoun in the second statement or identify a disambiguating homonym in the second statement.

Moreover, the server computer may be further configured to store and update the context information each time a new statement in the natural language is received by the input device.

The disclosed system may also include an output controller configured to dynamically generate a web page at a client computer based on at least one of the first information and the second information.

The disclosed system may also be used to facilitate a virtual salesman functionality to individuals who visit an e-commerce website.

### BRIEF DESCRIPTION OF THE DRAWINGS

Preferred features of the present invention are disclosed in the accompanying drawings, wherein similar reference characters denote similar elements throughout the drawings, and wherein:
FIG. 1A is a block diagram of a preferred embodiment of the disclosed system;
FIG. 1B is a block diagram of various databases of the disclosed system;
FIG. 2 is a diagram illustrating speech recognition in the disclosed system;
FIG. 3 is a diagram illustrating operation of a language model in the disclosed system;
FIG. 4 is a diagram illustrating query generation in the disclosed system;
FIG. 5 is a diagram illustrating results processing in the disclosed system;
FIG. 6 is a diagram illustrating a second language model in the disclosed system;
FIG. 7 is a diagram illustrating speech synthesis in the disclosed system;
FIG. 8 is a diagram illustrating operation of the disclosed system; and
FIG. 9 is a block diagram illustrating a client-server configuration of the disclosed system.

### DETAILED DESCRIPTION OF THE PREFERRED EMBODIMENTS

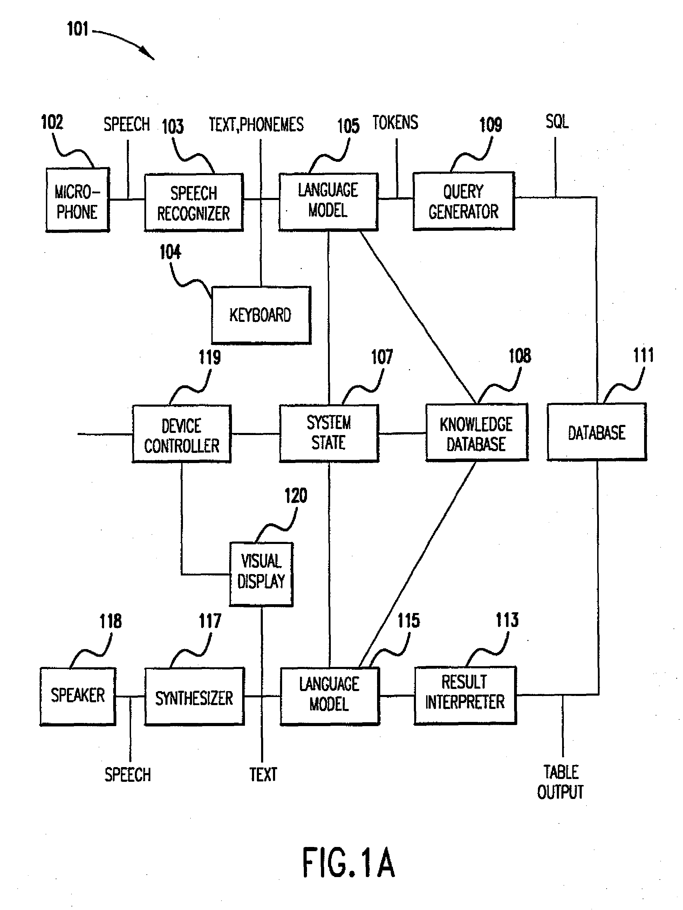

FIG. 1A illustrates a bilateral communication system 101 adapted to conduct a dialogue with a user and perform tasks that the user requests. As shown in FIG. 1A, system 101 preferably comprises a microphone 102. When a user speaks into microphone 102, the microphone generates an analog speech signal that is transmitted to a speech recognizer 103. Speech recognizer 103 converts the analog speech signal into phonemes in the form of digital text.

The output of speech recognizer 103 is transmitted to a first language model 105 that includes a parser. Language model 105 exchanges grammatical and other data with a system state 107 and a knowledge database 108. Using this data, language model 105 produces parsing tokens that it sends to a database query generator 109.

Database query generator 109 generates queries to a database 111. Database 111 searches data stored therein for the desired information and passes raw information to a result interpreter 113 that interprets the results. A second language model 115 receives the interpreted results from result interpreter 113 and exchanges relevant information with system state 107 and knowledge database 108 to produce a digital text response. Although illustrated in FIG. 1A as distinct components, it should be noted that first and second language models 105, 115 may be implemented as a single language model that performs the functions of first and second language models 105, 115.

The output from language model 115 is transmitted to a synthesizer 117 that converts the response text to analog speech for output to the user via a speaker 118. The components of system 101 described above, with the exception of microphone 102 and speaker 118, may preferably be implemented as software and/or data.

In an alternative preferred embodiment, system 101 may be implemented without microphone 102 and speech recognizer 103. In this embodiment, the user directly types a question or statement on a keyboard 104. In addition, system 101 may be implemented without synthesizer 117 and speaker 118. In that case, output to the user may take the form of text or other information displayed, for example, on a visual display 120.

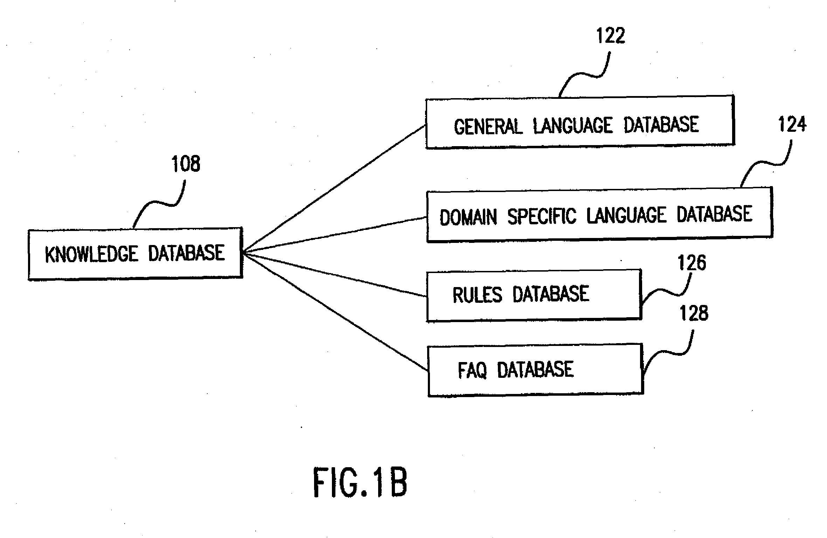

As discussed above, knowledge database 108 is preferably coupled to first and second language models 105, 115 and also to system state 107. A preferred embodiment of knowledge database 108 is shown in FIG. 1B. As shown in FIG. 1B, knowledge database 108 preferably comprises a general language database 122, a domain specific language database 124, a rules database 126, and a frequently asked question (FAQ) database 128.

General language database 122 preferably stores information relating to conventional natural language understanding such as a dictionary, a list of grammar rules and/or a synonym knowledge base. The synonym knowledge base is utilized, for example, in correcting misspelled words.

Domain specific language database 124 preferably stores usage specific information. Assume, for example, that system 101 is adapted to respond to queries from a user concerning the time and channel that a particular program will be broadcast. In that event, domain specific language database 124 preferably stores information relating to various television programs including the station that will broadcast them and the time at which they will be broadcast. In a second example, assume that system 101 is adapted to respond to queries from a user concerning computer devices. In that case, domain specific language database 124 preferably stores information relating to computer-related concepts, such as definitions and characteristics of random-access memories (RAMs), read-only memories (ROMs), displays, and central processing units (CPUs).

Rules database 126 preferably stores information directed to general constraints on items stored in the other databases. Thus, if in the first example above one of the programs for which information is stored in knowledge database 108 is Seinfeld, then one illustrative rule might be that the original Seinfeld programs were broadcast on Thursdays. Similarly, if in the second example above one type of computer for which information is stored is laptop computers, then one illustrative rule might be that laptop computers commonly have only one display monitor.

FAQ database 128 stores answers to frequently asked questions. Thus, continuing with the above examples, a frequently asked question in the first example might be: "Where and when is Seinfeld being broadcast this week?", and a frequently asked question in the second example might be "What is RAM?".

In one exemplary embodiment, database 111 may be a product database. For example, it may be a product database for computer devices that includes a list of items such as computers, software applications, computer accessories, memory devices, and display monitors.

System state 107 preferably comprises at least a portion of a memory bank that retains data from first and second language models 105, 115 concerning the context created by both statements made by the user and output from database 111. For instance, when a user asks a first question, system state 107 retains data from language model 105 concerning that question. In a preferred embodiment, the memory bank may be distributed between system state 107 and one or both of language models 105, 115.

After the user receives a response to a first question, the user may wish to ask follow-up questions. Thus, for example, if the user's first question was:
"Where and when is Seinfeld being broadcast this week?",
   and the response provided to the user by system 101 was:
"Monday through Friday at 7:30 PM",
   then the user might follow that answer with the request:
"Give me a summary of the third and fourth".
In that case, because system state 107 stores the context provided by the user's first question or statement as well as the context provided by the first answer, system 101 is able to respond to this request without the user repeating the facts in the initial question (i.e., that the user is referring to episodes of Seinfeld to be shown this week).

System 101 may then process the follow-up question or request using speech recognizer 103, first language model 105, system state 107, knowledge database 108. query generator 109, database 111, result interpreter 113, second language model 115, and synthesizer 117. System state 107 gives the second question or request a context from which it is understood that the user is referring to the initial inquiry concerning, for example, Seinfeld episodes. The output at speaker 118 will then include the requested summaries.

Continuing with this example, assume that, after receiving the summaries of the third and fourth episodes to be shown that week, the user asks system 101 to:
"Record the third episode".
To respond to that demand, system 101 again processes the input using speech recognizer 103, first language model 105, system state 107, knowledge database 108, query generator 109, database 111, result interpreter 113, second language model 115, and synthesizer 117. Again, system state 107 recollects the context information and permits the system to react to the more specific order from the user without requiring the user to repeat the earlier statements/questions or their factual predicate.

System state 107 may then operate a device controller 119 that takes the database results and the stored context information, and controls a device, such as a video cassette recorder (VCR), web browser, etc., and makes the device perform the action requested by the user. For example, device controller 119 may set a VCR to the time and channel of the episode or episodes to be recorded. At the same time, synthesizer 117 may cause speaker 118 to inform the user:
"Episode 3 set for recording at 11 P.M. Thursday."

Device controller 119 may be adapted to govern any number of devices. For example, if the user wishes to have system 101 browse the web, device controller 119 may control a browser to cause the browser to search for any kind of information and return graphic. text, sounds, pictures, video, multimedia, etc. The result can also be displayed on visual display 120.

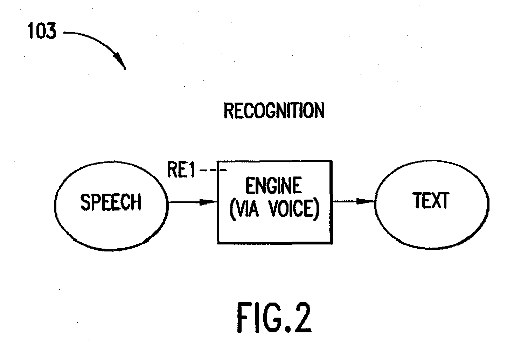

Speech recognizer 103 may be any speech recognition engine using computer application programs such as IBM Via Voice^{™} and Dragon Dictate^{™} both of which run on standard PC platforms. FIG. 2 illustrates an exemplary embodiment of speech recognizer 103 translating speech into text.

Text from speech recognizer 103 (or that is entered directly by the user), is then processed by first language model 105. In a preferred embodiment, language model 105 may pre-process the text. This pre-processing may include correcting any misspelled words and phrases by matching words and phrases in the text to words and phrases in the various databases of knowledge database 108. The pre-processing may further include expanding any abbreviations in the text.

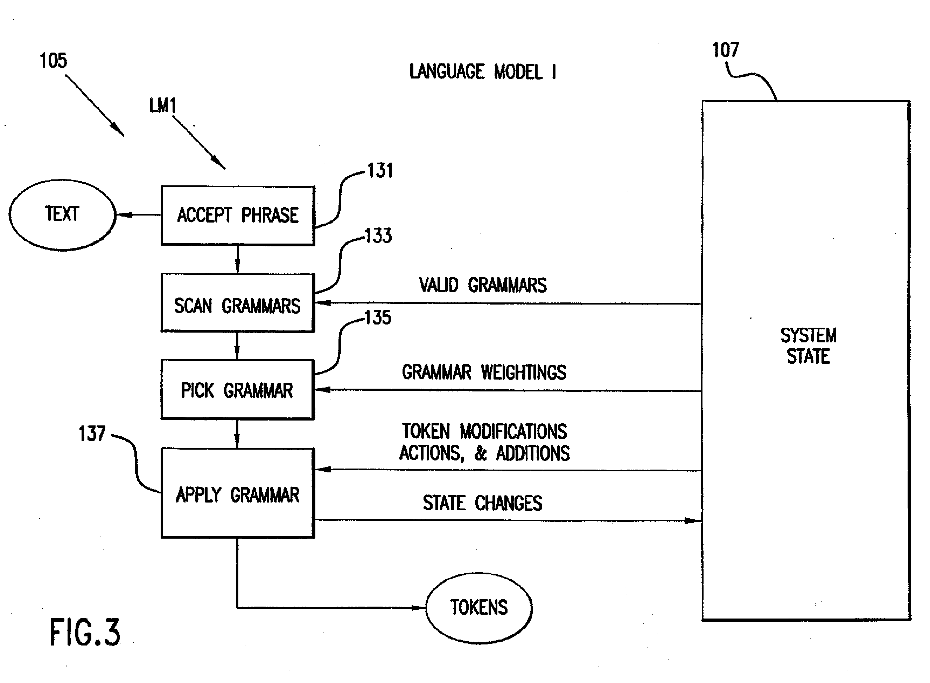

FIG. 3 illustrates subsequent operation of first language model 105. As shown in Fig. 3, language model 105 first assembles a complete "phrase" in an "Accept Phrase" section 131. Timing cues may provide information as to the end of a phrase. The timing cues can be extracted from stops and pauses when the user speaks to system 101 or when the user types the text using keyboard 104.

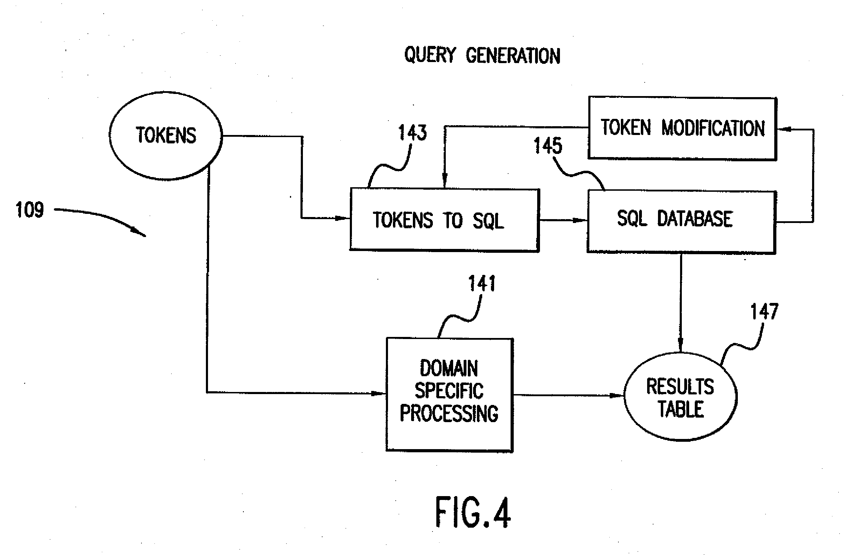

In a "Scan Grammar" section 133, language model 105 scans through a set of valid grammars and compares them with each incoming phrase. In a "Pick Grammars" section 135, language model 105 chooses a limited set of grammar candidates from system state 107 to explore based on their weightings. Each of the selected grammars is applied in an "Apply Grammar" section 137. The results of each grammar are evaluated and a single one is chosen based on several possible criteria. The state changes from the final grammar are sent to system state 107. The tokens generated by the final grammar are then sent to query generator 109, as will be described in connection with FIG. 4. Language model 105 can also search for special salient words and phrases in the text.

Turning to FIG. 4, there is shown a preferred embodiment of query generation in the present system. Query generator 109 can retrieve information from domain specific language database 124. Specialized domain processing based on the grammar and the instantiated tokens takes place in a domain specific processing section 141. Processing includes, but is not limited to, the generation of an SQL query from the tokens in a tokens-to-SQL section 143. The query may then be supplied to an SQL database 145. Examples of suitable database systems are Sybase™ and Oracle™.

If an appropriate answer for the grammar is not found, a fuzzy matching process may be employed to refine the answer, e.g., searching phonetically. The end result is a results table 147 containing the information requested.

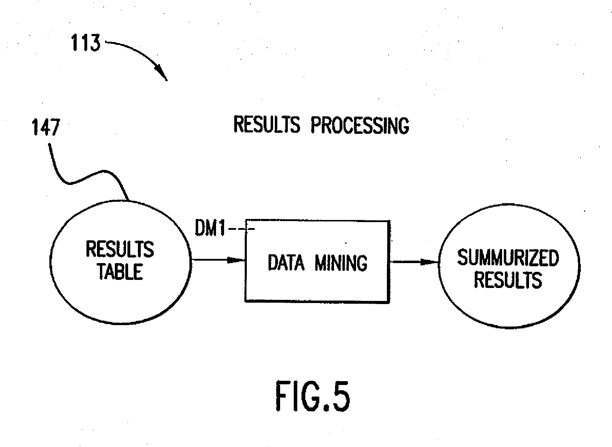

As shown in FIG. 5, the contents of results table 147 are sent to result interpreter 113 for additional data mining to produce summarized results. Information summary and consolidation features may also take place.

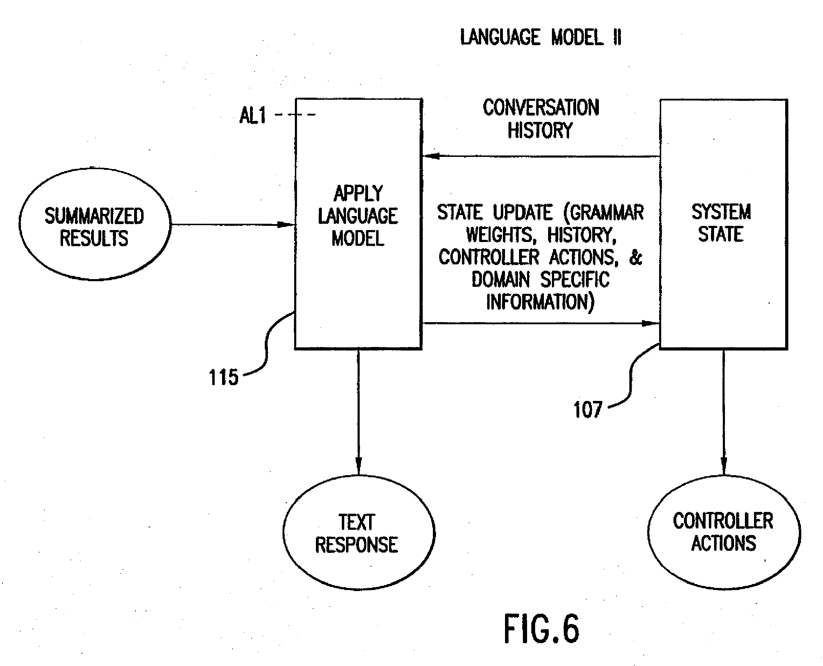

As shown in FIG. 6, the summarized results arrive at second language model 115. Here the current grammar and conversation history are used to interpret the returned data and generate a formatted response. System state 107 is updated to reflect the new conversation history and updates the grammar weightings for "Pick Grammars" 135 of first language model 105. Updates to system state 107 signal actions for the controlled unit to execute.

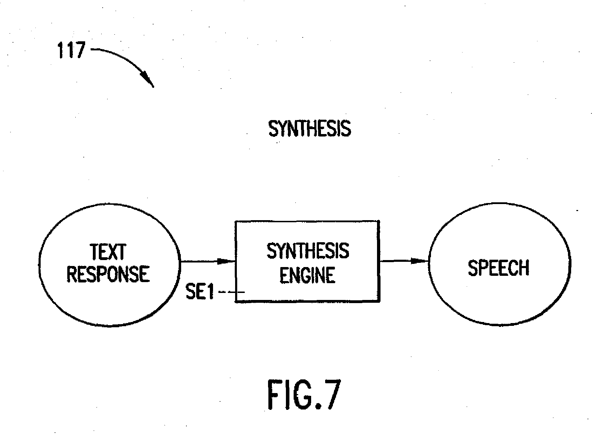

As shown in FIG. 7, the text portion of the response is then sent to synthesizer 117. Synthesizer 117 may be a standard speech synthesis engine. Here the text response is converted to speech and played back to the user.

At this point, the user may speak again and the process repeats itself, going from the general to the specific and using system state 107 to remember the user's more general statements and questions and the systems more general statements and answers so as to produce more specific responses.

In this process, speech is received, converted to text, a query is generated, output is created, and another query from the user follows. The result is typically a loop in which the dialogue progresses from general to specific.

Take the following third example. Assume that a user commences a dialogue with system 101 by saying:
"I'm looking for a song with particular lyrics A."
   System 101 may then identify the song and output the song's name to the user, in the manner described above. Assume further that the user next says:
"Can I see the lyrics?".
   In that event, system 101 may retrieve the lyrics from database 111 because system state 107 has memorized the first question and all the data connected therewith.

As noted, system 101 preserves the context that allows system 101 to respond to the second question. Otherwise, the user would have to say:
"Can I see the lyrics for song X?".
   More particularly, because it preserves context, system 101 is able to handle successive increasingly-specific questions. Take the following fourth example. Assume that the user's first statement to system 101 is:
"I'm looking for a Beatles album, the forty-fourth album by the Beatles."
   System 101 then provides the name of the forty fourth album, in the manner described above. If the user then says:
"What songs are on that particular album?",
and there are 20 songs on the album, system 101 may retrieve all the song titles from memory and output them to the user because it comprises a memory that retains the place in the conversation.

The memory bank may also store the tokens generated by language model 105 as part of the context. These tokens represent requests and constraints detected by language model 105, both current and previous. These tokens are updated and/or modified by both first and second language models 105, 115 based on the statements and/or questions by the user and the database query results. In a preferred embodiment, these updates may take the form of additions, modifications, or removals.

Take the following fifth example. Assume that at some point in a dialogue with system 101, the user states:
"I am looking for a computer less than $3000".
   In that event, an addition occurs, i.e., system 101 adds a price token to the context. If, however, the user subsequently states:
"I want to spend less than $2500",
   then a modification occurs, i.e., system 101 modifies the price token to reflect the user's latest statement. Finally, if the user subsequently states that:
"price is not important",
   then a removal occurs, i.e., system 101 removes the price token from context.

Since all non-trivial dialogs have a context, the memory bank is preferably configured to continually store the context of the dialog between the user and system 101. The context, built during processing of statements and/or questions entered by the user and the database query results, contains linguistic information, such as a list of possible grammars and weightings thereof. Certain processing is enabled through use of context including the processing of superlatives and comparisons. Take the following sixth example. Assume that a user states at some point during a dialogue with system 101 that:
"I would like something that costs less than that".
   In that event, system state 107 may look to the context to see what price range is currently in context. Alternatively, in a seventh example, assume that the user states:
"I would like the the cheapest one".
   In that event, the desired item may by identified by checking the list of results posted in the context during a previous output to the user.

The context may also contain information that allows language models 105. 115 to identify or define linguistic structures, such as antecedents for pronouns (e.g., if the user refers to "these" or "it") by utilizing histories of the database query results, histories of statements and/or questions entered by the user, histories of outputs generated, the nature and motivation of such outputs (i.e., answer, prompt, request for clarification), and context at the time of earlier processing by language models 105, 115.

Linguistic information may also be used to disambiguate user statements, such as those containing homonyms (for speech recognition or misspelled words), or references to earlier identified items (e.g., "the second one"). This information may also be used to post expectations in the form of probabilities or weightings to help language models 105. 115 to better process words, phrases, and the occurrence of features or units.

Take the following eighth example. If at some point during a dialogue with a user, system 101 output the question:
"how much would you like to spend".
   system 101 may post into context that price is a likely feature to be input next. Then, when the user inputs a response such as:
"2000",
   that response may be correctly interpreted as a price parameter. Alternatively, in a ninth example, assume that at some point in a dialogue with the user, system 101 output the question:
"what do you expect to use this computer for?".
   In that event, system 101 may post an expectation that an activity will likely be input next. A response from the user of "gaming" may then be properly interpreted grammatically and semantically.

The context may also contain information that is characteristic of a continuing dialogue between the user and system 101. For example, an unfulfilled request, and the number of times such a request has remained unfulfilled, may be utilized to guide language models 105, 115 to generate a helpful statement and/or a helpful question to be presented to the user. Other examples include recommendations made that are close to the desired query, changes in requirements (e.g., "I decided that 1 don't care about price"), and events when the user failed to respond to a prompt or suggestion. Furthermore, context may contain information gathered about the user, such as preferences. This profiling information can be stored for interactions at a later date.

The context may be updated with each exchange (input and response) of the conversation. The context stores previously detected constraints and requests that are combined with the latest verbal input to create a progressively more refined database query.

Since the context is utilized, output of system 101 may be in the form of the requested information, an indication that the information is not available, a request for clarification, a recommendation, and/or a prompt for more information. Returning to the first example, the reply to the user's initial question concerning Seinfeld episodes may be:
"There are five Seinfeld episodes this week, the first on Sunday at 8:00 PM on channel 110, the second on Wednesday, etc."
   rather than simply stating:
"Five episodes are available".
   System state 107 then retains data concerning the answer.

In a ninth example, if a request is made for computers that are:
"good for running spreadsheets",
   and 3 such computers are found, the system output may be:
"all 3 are good for spreadsheets"
   rather than simply:
"here are 3 that you asked for."
In addition, a combination of the user statements and/or questions, the summarized results, and context may be used to control device controller 119.

As noted above, the present invention furnishes database access, in particular access to a relational database accessed via SQL. In a preferred embodiment, system 101 assumes that the user's goal is always to form an SQL query. The language model assisted by the context offered by the working memory forms the basis for the query. In a tenth example, if the user asks for:
"a list of Beatles albums"
   then that request is stored in working memory. Therefore if the user subsequently asks for:
"albums from 1969",
   the query will be generated based on Beatles albums from 1969.

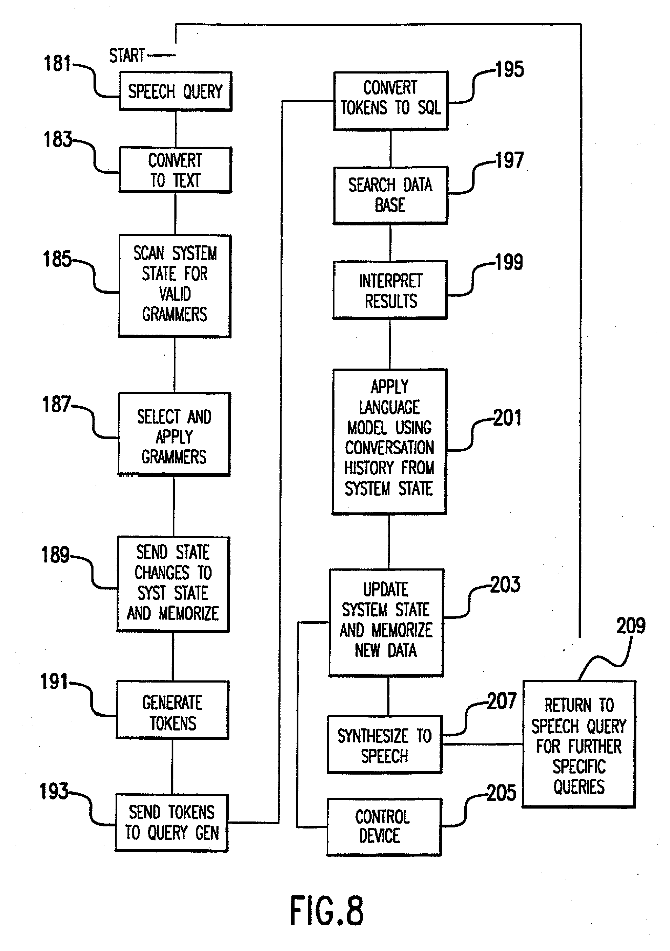

FIG. 8 is a flow chart depicting operation of system 101. As shown in FIG. 8, in step 181 the user enters a statement or question into a speech receiver such as microphone 102 that may be part of speech recognizer 103. In step 183 speech recognizer 103 converts the speech into phonemes in the form of digital text. In step 185, first language model 105 that includes a parser receives the digital text from speech recognizer 103. "Accept Phrase" section 131 of first language model 105 assembles a complete "phrase." A complete phrase may, for example, be determined by a delay greater than a specific amount of time. Still in step 185, "Pick Grammars" section 135 scans a limited set of grammar candidates to explore in system state 107 based on their weightings.

In step 187, grammars are chosen and applied by "Apply Grammar" section 137. The results of each grammar are evaluated and a single one is chosen based on which is the best fit. In step 189, the grammar is executed and state changes from the final grammar are sent to system state 107 for memorization. In step 191, first language model 105 generates tokens on the basis of the final grammar. In step 193, first language model 105 sends the tokens to query generator 109. In step 195, query generator 109 generates an SQL query from tokens in tokens-to-SQL section 143. In step 197, database 111 is searched to form result table 147 containing the information requested.

In step 199, result interpreter 113 receives table 147 for additional data mining to interpret the results. In step 201, second language model 115 uses the interpreted results and the conversation history from system state 107. Specifically, the current grammar and conversation history are used to interpret the returned data and generate a formatted response. In step 203, system state 107 is updated to reflect the new conversation history and updates the grammar weightings for "Pick Grammars" 135 phase of first language model 105.

If the conversation is complete, in step 205, system state 107 signals control of actions, if any, for the controlled unit to execute. In step 207, synthesizer 117 synthesizes the signals to speech. That is, the text portion of the response is then sent to a standard speech synthesis engine where it is converted to speech and played back to the user. The text to speech synthesizer may be in the form of that available under the trademark Accuvoice.

Step 209 involves return to the speech query step 181 for further specific queries. Here, the user speaks again in step 181, and text is converted in step 183 and the process repeats itself, going from the general to the specific and using system state 107 to remember the more general questions so as to produce the more specific answers. In steps 189 and 191, the grammar is executed and tokens generated depending upon the conversation stored in system state 107. Also, the conversation history and grammar weightings in system state 107 are updated. This varies depending on the grammar chosen.

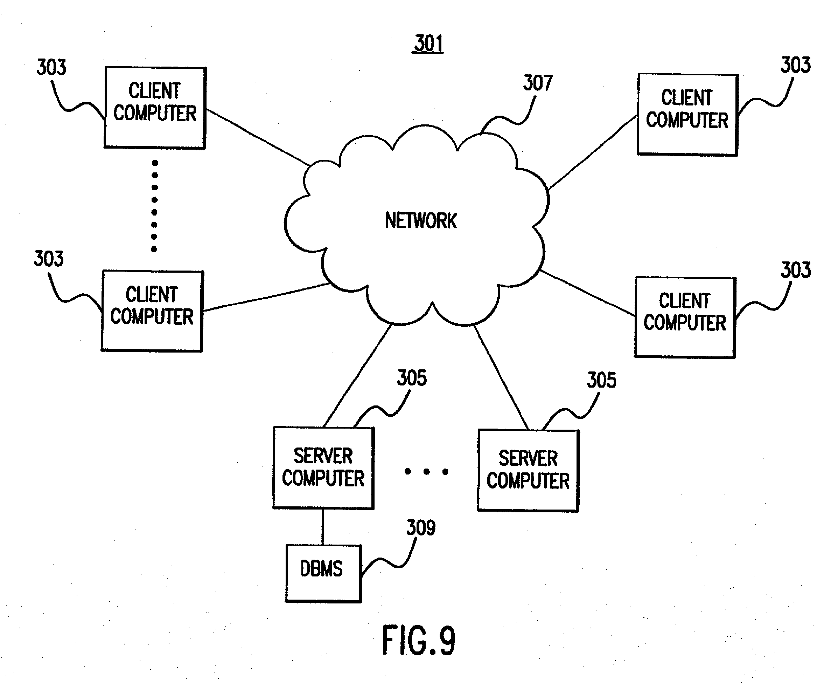

FIG. 9 illustrates a preferred client-server environment 301 in which the present invention may be implemented. In particular, client-server environment 301 includes a number of client computers 303 connected to one or more server computers 305 via a network 307. Network 307 may use the Internet communications protocols (TCP/IP) to allow client computers 303 to communicate with server computers 305. Client-server environment 301 further includes one or more database management systems 309 which may preferably be connected to one of server computers 305. However, database management system 309 may alternatively be located anywhere on network 307 as long as it can be accessed and/or controlled by server computers 305. Database management system 309 is preferably configured to store and manage knowledge database 108 and database 111.

Client computers 303 may be personal computers (PCs), workstations or other computer processing units. Each client computer 303 typically includes one or more processors, memories, and input/output devices. Server computers 305 may be similarly configured. However, in many instances server computers 305 may include one or more high performance computers (e.g., workstations) locally networked together. In fact, network 307 may include hundreds of thousands of individual networks of computers, e.g., the Internet. Although client computers 303 are shown separate from server computers 305, it should be understood that a single computer can perform the client and server roles as well.

In operation, the user at one of client computers 303 desiring to communicate with server computers 305 may use a user interface at client computers 303. In the preferred embodiment, the user interface may be a World-Wide-Web (WWW) browser (or in short a web browser). A web browser may display plain textual information or more complex digitally encoded multimedia content, such as software programs, graphics, audio signals, videos, and etc. Web pages processed by a web browser may be implemented in a variety of computer languages such as using a standard page description language known as Hypertext Markup Language (HTML), Extensible Markup Language (XML) or JAVA^{™}, or any other software language or tool for displaying or otherwise outputting information. For instance, HTML provides basic document formatting and allows the developer to specify "links" to other web pages. Using an HTML-compatible browser (e.g., Netscape Navigator^{™} or Microsoft Internet Explorer^{™}) at a client computer, the user can make a request to the server (sometimes referred to as a "Web site") identified in the link and, in return, receive a document or other object formatted according to HTML. It should be noted that the request by the user can be in the form of voice statements/questions or text inputs as discussed above.

It should be understood that network 307 can also be another wide or local area network (WAN or LAN) and may employ communications protocols other than TCP/IP.

Referring back to FIG. 1, the various components of system 101 discussed above may reside at a client computer and/or a server computer. For instance, in one exemplary embodiment, microphone 102 and speaker 118 may reside in a client computer, and the remaining components described in FIG. 1 in a server computer. In this exemplary embodiment, a statement uttered by a user at a client computer is preferably converted to an analog speech signal. The analog speech signal is then forwarded to speech recognizer 103 which can be located either at a client computer or in a server computer. The subsequent processing is performed by the server computer in which the rest of the components reside. After processing the statement as discussed above in connection with FIGs. 1-8, the output generated by the server is then forwarded to the client computer in which speaker 118 resides. It should be noted that the client computer in which microphone 102 resides can be different from the client computer in which speaker 118 resides.

Further, as discussed above, device controller 119 may control a web browser. More specifically, the output generated by the server may include text, lists, pictures, graphics, and other objects that can be output to a user. Therefore, device controller 119 is further configured to dynamically generate, for example, one or more web pages on the client computer by automatically arranging the output into one or more web pages as known in the art.

In another exemplary embodiment, the input can be text input. In this embodiment, speech related components are not provided.

In a preferred embodiment, system 101 may be adapted to provide a virtual salesman functionality in an e-commerce environment. In particular, system 101 may be located at an e-commerce website comprising, for example, a plurality of static, dynamic, and/or active webpages comprising information concerning items or services for sale or rental and additional software to facilitate the sale or rental of the items or services to customers who visit the website. This additional software may, for example, comprise payment software to permit a user to pay for an item or service with, for example, the user's credit card.

In this preferred embodiment, system 101 may be adapted to engage in a sales dialogue. Thus, for example, the system could facilitate the following dialogue:

| | |
|---|---|
| User input #1: | URL of e-commerce site |
| System response #1: | Hi. Welcome to e-commerce.com. What would you like to buy today? |
| User input #2: System response #2: | I'd like to buy a computer. What kind of computer do you want? |
| User input #3: | I'm not sure. |
| System response #3: | Well, how are you going to use the computer? |
| User input #3: | Well, I travel a fair amount and I like to play computer games. |
| System response #4: | Sounds like you could use a laptop with a good size hard drive. |
| User input #5: | What's a hard drive? |
| System Response #6: | It is one type of memory in a computer. It is typically the biggest memory in the computer and is used to store large programs and chunks of data. Let me show you some laptops that might be good for you. |
| | [output dynamic web page displaying laptops with large hard drives] |
| User input #7: | Those are too expensive! |
| System response #7: | OK, let me see if we've got some that are a little more in your price range. How much were you looking to spend? |
| User input #8: | About $2500. |
| System response #8: | OK, here are some laptops with good size memories in that range. [output dynamic webpage with reasonably priced laptops with relatively large hard drives] |
| User input #9: | That third one looks good. |
| System response #9: | Would you like to buy it? |
| User input #10: | Yes. |
| System response #10: | How would you like to pay for it? |
| User input #11: | Credit card, please. |
| System response #11: | What kind of card is it? |
| User input #12: | Visa |
| System response #12: | What is the card number? |
| User input #13: | 5555 5555 5555 5555 |
| System response #13: | Expiration date? |
| User input #14: | ten-oh-two |
| System response #14: | OK, one second while I confirm the transaction .... OK, the transaction is confirmed. How do you want us to deliver it? |
| User input #15: | Can you send it UPS? |
| System response #15: | Sure. What is your address? |
| User input #16: | 555 Walnut Street, Anywhere USA. |
| System response #16: | OK, we will send your computer out today, you should get it tomorrow. |

Thus, system 101 may be utilized to provide a virtual salesman functionality to individuals who visit an e-commerce website.

While embodiments of the present invention have been described in detail it will be evident to those skilled in the art that the present invention may be embodied otherwise without departing from its spirit and scope.

Aspects and features of the present disclosure are set out in the following numbered clauses which contain the subject matter of the clauses of the parent application as filed.
1. A human-machine communication method comprising:
   receiving a first statement in a natural language from a user;
   generating first information based on the first statement;
   storing context information of at least one of the first statement and the first information;
   optionally generating a question to be presented to the user in the natural language based on the context information;
   receiving a second statement in the natural language from the user; and
   generating second information based on the second statement and the context information.
2. The method of clause 1 further comprising:
   incorporating content information generated based on the second information into a web page.
3. The method of clause 2 further comprising:
   dynamically generating the web page based on the content information.
4. The method of clause 1 further comprising:
   generating grammatical data for the first statement;
   generating one or more parsing tokens based on the grammatical data; and
   storing the parsing tokens as part of the context information.
5. The method of clause 4 further comprising:
   adding, modifying or removing the stored parsing tokens based on the second statement.
6. The method of clause 1 further comprising:
   identifying linguistic structures in the second statement based on the context information.
7. The method of clause 6 further comprising:
   identifying an antecedent to a pronoun in the second statement.
8. The method of clause 7 further comprising:
   disambiguating homonym in the second statement.
9. The method of clause 1 further comprising:
   storing and updating the context information each time a new statement in the natural language is received.
10. The method of clause 1 further comprising:
   providing at least one of a superlative and a comparison of the first information based on the context information, wherein the first information includes a plurality of items that can be compared with each other.
11. A human-machine communication system comprising:
   a server computer comprising:
      an input device configured to receive a first statement in a natural language from a user, wherein the server computer is configured to generate first information based on the first statement;
      a memory bank configured to store context information of at least one of the first statement and the first information;
      the input device further configured to receive a second statement in the natural language from the user, wherein the server computer is further configured to optionally generate a question to be presented to the user in the natural language based on the context information and configured to generate second information based on the second statement and the context information.
12. The system of clause 11 further comprising:
   a client computer configured to receive a plurality of statements from the user and configured to forward the received plurality of statements to the server computer.
13. The system of clause 11 wherein the server computer further comprises:
   a knowledge database configured to provide language processing information,
   wherein the server computer is further configured to generate a plurality of parsing tokens based on the first statement and the language processing information, and
   wherein the memory bank is further configured to store the parsing tokens as part of the context information.
14. The system of clause 13 wherein the server computer is further configured to add, modify or remove the stored parsing tokens in the memory bank based on the second statement.
15. The system of clause 13 wherein the server is further configured to generate the plurality of parsing tokens based on, in part, timing cues of the first statement.
16. The system of clause 11 wherein the server computer is further configured to identify linguistic structures in the second statement based on the context information.
17. The system of clause 16 wherein the server computer is further configured to identify an antecedent to a pronoun in the second statement.
18. The system of clause 16 wherein the server computer is further configured to identify a disambiguating homonym in the second statement.
19. The system of clause 11 wherein the server computer is further configured to store and update the context information each time a new statement in the natural language is received by the input device.
20. The system of clause 11 wherein the server computer is further configured to provide at least one of a superlative and a comparison of the first information based on the context information, wherein the first information includes a plurality of items that can be compared with each other.
21. The system of clause 11 wherein the server computer further comprises:
   an output controller configured to dynamically generate a web page at a client computer based on at least one of the first information and the second information.
22. A human-machine communication method, comprising:
   receiving a first statement in a natural language from a user;
   generating first information based on the first statement;
   storing context information in a system state memory that is a function of the first information;
   generating a database query that is a function of the first information;
   generating database output that is a function of the database query;
   generating second information that is a function of the database output and the stored context information;
   storing an expectation in the system state memory that is representative of an expected form of a statement from the user;
   receiving a second statement in a natural language from a user; and
   utilizing the expectation to comprehend the second statement.

## Claims

1. A human-machine communication system, comprising:
a server configured to act as a virtual salesman in an e-commerce environment, the server further configured to:
receive a first statement from a user;
generate first information based on the first statement;
store context information of at least one of the first statement and the first information;
receive a second statement from the user;
optionally generate a question to be presented to the user in a natural language based on the context information;
generate second information based on the second statement and the context information; and
in response to a user's request and said context information,
facilitate a purchase or rental of a product or service from a merchant through a merchant's e-commerce website.

2. A system as claimed in claim 1, wherein the server is configured to receive at least one of the first or second statements by receiving an analog speech signal.

3. A system as claimed in claim 1 or 2, wherein at least one of the first statement or the second statement pertains to a product type.

4. A system as claimed in claim 3, wherein said second statement pertains to an end use of said product type.

5. A system as claimed in any preceding claim, wherein the server is configured to receive additional statements from the user, wherein the additional statements comprise one or more of: a statement that pertains to a product type, a statement that pertains to an end a use of said product type, or a statement that pertains to a price of said product type.

6. A system as claimed in any preceding claim, wherein at least one of the first or second statements comprises a statement or a question, and/or
wherein at least one of the first or second statements comprises a natural language question or statement associated with a product or service.

7. A system as claimed in any preceding claim, wherein the server is configured to receive the first and second statements via a wireless network.

8. A system as claimed in claim 7, wherein the wireless network comprises a WAN or a LAN.

9. A human-machine communication system comprising:
a device configured to enable communication with a server;
means for receiving a first and at least one additional statement spoken in a language by a user, wherein the device is configured to cause at least one of the device or the server to perform one or more of the following:
generate first information based on the first statement;
store context information of at least one of the first statement and the first information;
optionally generate a question to be presented to the user in the language based on the context information; and
generate second information based on said at least one additional statement and the context information; and
means for receiving a user's request for an action, wherein the device is configured to enable performance of said action, under the influence of the server and said context information.

10. A human-machine communication method comprising:
receiving, with a device, a first and at least one additional statement spoken in a language by a user;
causing at least one of the device or a server with which the device can communicate to perform one or more of the following:
generate first information based on the first statement;
store context information of at least one of the first statement and the first information;
optionally generate a question to be presented to the user in the language based on the context information; and
generate second information based on said at least one additional statement and the context information; and
receiving, with the device, a user's request for an action; and
enabling performance of said action, under the influence of the server and said context information.

11. A system according to claim 9 or a method according to claim 10, wherein the device is configured to enable communication with a server over at least one of a network, the internet, a WAN, and a LAN.

12. A system according to claims 9 and 11 or a method according to claims 10 and 11, wherein the device is configured to enable wireless communication with a server.

13. A system according to claims 9, 11 and 12 or a method according to claims 10, 11 and 12, wherein said action comprises an action that controls said device through a device controller.

14. A system according to claims 9 and 11 to 13 or a method according to claims 10 to 13, wherein said action comprises an e-commerce action.

15. A system according to claims 9 and 11 to 14 or a method according to claims 10 to 14, wherein said e-commerce action comprises a purchase action or a rental action.
